# EUROPEAN PATENT APPLICATION

(11) **EP 4 289 981 A1**
(43) Date of publication of application: **13.12.2023**
(21) Application number: 22749445.7
(22) Date of filing: 14.01.2022
(51) Int. Cl.: C22C 14/00, B23K 35/02, B23K 35/32

(54) **WIRE ROD FOR FORMING MOLTEN METAL, AND WELDING PRODUCT**

(30) Priority: 08.02.2021 JP 2021018588
(71) Applicant: Daido Steel Co., Ltd., Nagoya-shi Aichi 461-8581 (JP)
(72) Inventor: NAGAYA, Masashi, Nagoya-shi, Aichi 457-8545 (JP); NAKAMURA, Hironori, Nagoya-shi, Aichi 457-8545 (JP); OSAKI, Mototsugu, Nagoya-shi, Aichi 457-8545 (JP)
(74) Representative: Diehl & Partner
(86) International application number: PCT/JP2022/001222
(87) International publication number: WO 2022/168568

(57) **Abstract**

This wire rod for forming a molten metal is composed of Ti, or a Ti alloy, has an oxygen-enriched layer on a surface thereof, and contains a metal compound having at least one metal selected from the group consisting of an alkali metal and an alkaline earth metal such that the total mass of the alkali metal and/or alkaline earth metal is set to 0.002-0.050 mass% with respect to the total mass of the wire rod. Cracks filled with the metal compound are formed on the surface, and the area proportion of the cracks is 4-25%.

## Description

### TECHNICAL FIELD

The present invention relates to a wire rod for forming a molten metal of a Ti-based material and a welded product having a welded portion formed by using the same.

### BACKGROUND ART

Metal inert gas welding (MIG welding) is advanced in such a manner that an arc is generated between a welding wire fed from a welding apparatus and a material to be welded in a state where the welding wire and the material to be welded are covered with a shielding gas, and droplets of the welding wire generated at that time are transferred and landed on the material to be welded, thereby continuously forming a bead.

At this time, it is important to stabilize the generated arc. In the case where the generated arc is not stable, the formed bead may be constricted or a large amount of spatter may occur. In addition, a padding state is not uniform. A bead having such a shape cannot be said to ensure reliability of strength characteristics of a welded portion.

As a method for stabilizing an arc, it is known to use an oxygen-containing gas as a shielding gas. However, in the case of using a welding wire for MIG made of Ti or a Ti alloy, when the oxygen-containing gas is used as the shielding gas, not only a bead surface is oxidized but also ductility of the welded portion is lowered. Therefore, a high-purity inert gas such as pure Ar gas is used as the shielding gas. However, in the case where the high-purity inert gas is used, a cathode spot during arc discharge becomes unstable.

Therefore, in the welding wire made of Ti or a Ti alloy, an oxide layer is formed on a surface of the welding wire to stabilize the cathode spot, a groove is formed on the surface of the welding wire, and a metal compound of an alkali metal or an alkaline earth metal is held in the groove, thereby improving feedability and arc stability (for example, see Patent Literature 1 described below).

### CITATION LIST

### PATENT LITERATURE

Patent Literature 1: JP2006-136940A

### SUMMARY OF THE INVENTION

### TECHNICAL PROBLEM

However, even in the case where the groove is formed on the surface of the welding wire and the metal compound of the alkali metal or the alkaline earth metal is held in the groove, there is a problem that the arc is still unstable during welding. Such a problem occurs when long-time welding is performed, such as when there are many or long welding points, or when multi-layer welding is performed.

In view of the above circumstances, an object of the present invention is to provide a wire rod for forming a molten metal, which is excellent in arc stability in long-time welding, and a welded product using the same.

### SOLUTION TO PROBLEM

Therefore, the present invention provides a wire rod for forming a molten metal:
including Ti or a Ti alloy,
including an oxygen-enriched layer on a surface,
including a metal compound containing at least one metal selected from the group consisting of an alkali metal and an alkaline earth metal such that a total mass of the alkali metal and/or the alkaline earth metal is 0.002 mass% to 0.050 mass% with respect to a total mass of the wire rod,
having cracks filled with the metal compound, on the surface, and
having an area ratio of the cracks being 4% to 25%.

Oxygen in the oxygen-enriched layer can stabilize generated arc and at the same time lower surface tension of a leading end of the wire rod that is melted, so that generated droplets are easily released from the leading end of the wire rod.

In addition, since a boiling point and an ionization voltage of the alkali metal or the alkaline earth metal are lower than a melting point and the ionization voltage of Ti, the alkali metal or the alkaline earth metal is present as metal vapor ionized in a field of the generated arc before a base material (Ti or Ti alloy) is melted by arc heat, and thus a generated arc column can be stabilized. Therefore, in the present invention, the metal compound containing at least one metal selected from the group consisting of the alkali metal and the alkaline earth metal is contained such that the total mass of the alkali metal and/or the alkaline earth metal is 0.002 mass% to 0.050 mass% with respect to the total mass of the wire rod.

Here, the present inventors have found that a cause of unstable arc in long-time welding occurred even in a wire rod containing a predetermined amount of the metal compound is due to non-uniformity of distribution of the metal compound. The present invention is made on the basis of such findings, and according to the present invention, by setting the area ratio of the cracks formed on the surface of the wire rod to 4% to 25%, it is possible to hold a predetermined amount of the metal compound in a state of being uniformly distributed on the surface of the wire rod (specifically, in the cracks formed on the surface), thereby improving the arc stability in the long-time welding.

Here, in the present invention, an extension depth of the cracks may be set to 20 µm or less. In the case where a deep crack having a depth of more than 20 µm is present in the cracks formed on the surface, the metal compound may be excessively held in the deep crack, and the distribution of the metal compound tends to vary as a whole, and thus it is preferable that the extension depth of the cracks formed on the surface of the wire rod is 20 µm or less.

In the present invention, when the number of the cracks present per predetermined length A µm in a longitudinal direction of the wire rod is B, a length between the cracks obtained by A/B may be 15 µm or less. This is because in the case where the distance between cracks in the longitudinal direction becomes excessively long, the arc may become unstable.

In the present invention, a boiling point of the metal may be 2,000°C or lower, and the metal compound may be a metal compound containing Ca.

In the present invention, an average oxygen concentration of the oxygen-enriched layer may be set to 1 mass% to 40 mass%.

A welded product of the present invention includes a welded portion welded by using the wire rod for forming a molten metal, and the welded portions has a total length of 300 mm or more. The wire rod for forming a molten metal is excellent in the arc stability during a long-time welding, and thus it is possible to favorably prevent welding defects in the welded product having a welded portion having a total length of 300 mm or more.

### BRIEF DESCRIPTION OF DRAWINGS

FIG. 1 is an explanatory diagram of a concentrated arc defined in the present invention.
FIG. 2 is a scanning electron micrograph of a cross section of a surface layer portion of a welding wire according to Example 24.
FIG. 3 is a scanning electron micrograph of a surface of the welding wire according to Example 24.
FIG. 4 is an explanatory diagram of a length between cracks defined in the present invention.

### DESCRIPTION OF EMBODIMENTS

A welding wire used as a wire rod for forming a molten metal according to the present embodiment is made of Ti or a Ti alloy and has an oxygen-enriched layer on a surface thereof. Further, on the surface of the welding wire, fine surface cracks generated in a wire drawing step, which will be described later, are formed to be distributed over the surface of the entire welding wire. The surface cracks are formed as cracks having a certain depth from the oxygen-enriched layer on the surface of the welding wire toward an inner layer portion of a base material, and the cracks are filled with a metal compound described later containing an alkali metal or an alkaline earth metal.

The oxygen-enriched layer and an average oxygen concentration thereof are defined as described below. That is, a cross section of the wire is mirror-polished, and an oxygen concentration distribution is surface-analyzed by electron probe micro analysis (EPMA). When the oxygen concentration at a wire central portion obtained by the analysis is set to 1, a region where the oxygen concentration is 1.2 or more (1.2 times or more the oxygen concentration at the wire central portion) is defined as the oxygen-enriched layer. An average value of oxygen concentrations in regions (five measurement points) where the oxygen concentration is 1.2 or more is defined as the average oxygen concentration of the oxygen-enriched layer. In the case where the oxygen concentration varies in a circumferential direction of the cross section of the wire, concentration measurement circles are set at various positions in a radial direction of the cross section, and oxygen concentrations are averaged along each concentration measurement circle, whereby the oxygen concentration distribution in the radial direction of the cross section averaged in the circumferential direction is obtained. In the oxygen concentration distribution in the radial direction of the cross section, a region where the oxygen concentration is 1.2 times or more the oxygen concentration of the wire central portion is defined as the oxygen-enriched layer.

A thickness of the oxygen-enriched layer in the welding wire of the present embodiment is preferably thicker than a natural oxide film generated on the wire surface. A thickness of the natural oxide film is generally 40 nm to 100 nm.

The oxygen-enriched layer of the welding wire of the present embodiment satisfies the following relation.

That is, when the thickness of the oxygen-enriched layer is set to Tw and a wire diameter of the welding wire is set to Dw, a value of Tw/Dw is 0.3 × 10⁻³ to 1 × 10⁻¹, and the average oxygen concentration of the oxygen-enriched layer is 1 mass% or more. By forming the oxygen-enriched layer having such a thickness and average oxygen concentration, it is possible to greatly improve feedability of the wire through a conduit tube or the like of a welding apparatus.

In addition, stability of the arc during arc welding or arc spraying is also improved.

In the case where Tw/Dw is less than 0.3 × 10⁻³ (Tw is less than 0.03% of Dw) or the average oxygen concentration of the oxygen-enriched layer is less than 1 mass%, the effect of improving the feedability is not sufficient. In addition, the arc is likely to become unstable, which is disadvantageous in forming a uniform weld bead or a sprayed layer. In the case where Tw/Dw exceeds 1 × 10⁻¹ (Tw exceeds 10% of Dw), the formation of the oxygen-enriched layer takes an extremely long time and is difficult, and the effect is poor. In the case of use in welding or the like, rather, adverse effects such as a decrease in a strength of a welded joint of a welded structure may occur.

An upper limit value of the average oxygen concentration of the oxygen-enriched layer is described below. It is considered that the average oxygen concentration of the oxygen-enriched layer is maximum in the case where all of the oxygen-enriched layer is formed of titanium oxide, and the value thereof is equal to an oxygen content ratio calculated from a molecular formula of the formed oxide. For example, in the case where the formed oxide is TiO₂, the upper limit value of the average oxygen concentration calculated from a stoichiometric oxygen content of TiO₂ is 40.06 mass% (calculated assuming that the atomic weight of Ti is 47.88 and the atomic weight of oxygen is 16.0). A Ti oxide having a higher stoichiometric ratio of oxygen than TiO₂ may be formed. For example, in the case where Ti₂O₅ is formed, the upper limit value of the average oxygen concentration is 45.52 mass%. Therefore, it is not generally considered that the maximum value of the average oxygen concentration of the oxygen-enriched layer exceeds 45.52 mass%. Therefore, it can be said that the maximum value of the average oxygen concentration of the oxygen-enriched layer is 45.52 mass%. However, in the case where the average oxygen concentration of the oxygen-enriched layer is 45.52 mass%, adverse effects such as a decrease in ductility of the welded portion may occur. Therefore, the average oxygen concentration of the oxygen-enriched layer is preferably 40 mass% or less.

In order to make the arc stabilizing effect more remarkable, it is more preferable to adjust the ratio Tw/Dw of the thickness Tw of the oxygen-enriched layer to the wire diameter Dw in the range of 1 × 10⁻³ to 1 × 10⁻¹. In particular, in the case where an oxygen diffusion layer (a phase containing less oxygen than titanium oxide in a portion located in an inner layer than an outermost surface layer portion and in which oxygen is diffused in a metal phase mainly containing Ti) is formed in addition to a titanium oxide layer (equivalent to or thicker than the thickness of about 40 nm to 100 nm of the natural oxide film) as the outermost surface layer portion due to the adoption of a thermal oxidation method or the like, the thickness of the oxygen-enriched layer is increased by a thickness of the oxygen diffusion layer, and thus Tw/Dw is highly likely to be in the above-described preferable range.

In the case of being used as a wire for welding, when the oxygen-enriched layer becomes excessively thick or the average oxygen concentration becomes excessively high, the strength of the welded joint of the obtained welded structure may be impaired. Hence, in the case of being used as the wire for welding, it is more preferable that Tw/Dw is limited to 1 × 10⁻³ to 50 × 10⁻³ (Tw is 5% of Dw) and the average oxygen concentration of the oxygen-enriched layer is limited to 1 mass% to 30 mass%. In addition, also in the case of being used as a wire rod for spraying, when it is desired to form a high-strength sprayed layer in which oxidation is prevented as much as possible by using an inert gas such as argon as a spraying medium, it may be preferable to limit Tw/Dw and the average oxygen concentration to the same range.

The welding wire of the present example contains a metal compound containing at least one metal selected from the group consisting of an alkali metal and an alkaline earth metal. Examples of the alkali metal include Li, Na, K, Rb, and Cs, and examples of the alkaline earth metal include Ca, Sr, and Ba. In addition, an appropriate metal may be selected from the alkali metal, an appropriate metal may be selected from the alkaline earth metal, and compounds thereof may be used together, whereby the alkali metal and the alkaline earth metal may be contained together. Specifically, a metal compound such as carbonate is preferable as the metal compound. In particular, sodium carbonate, potassium carbonate, and calcium carbonate are preferable.

The metal compound in the present invention preferably contains a metal having a boiling point of 2,000°C or lower, and more preferably a metal having a boiling point of 600°C or higher and 2,000°C or lower among the alkali metal and alkaline earth metal described above. In particular, it is preferable to contain one or more of K, Na, Ca, and the like. It is more preferable to use a metal compound containing Ca.

All of these metals have lower boiling points and ionization voltages than Ti, which is a main component of the base material. Since these metals are present in the cracks present on the surface of the welding wire, these metals become ionized metal vapor and exist in the arc field before the base material (Ti) is melted by the arc heat at the time of MIG welding. Therefore, the generated arc becomes a concentrated arc and is stabilized.

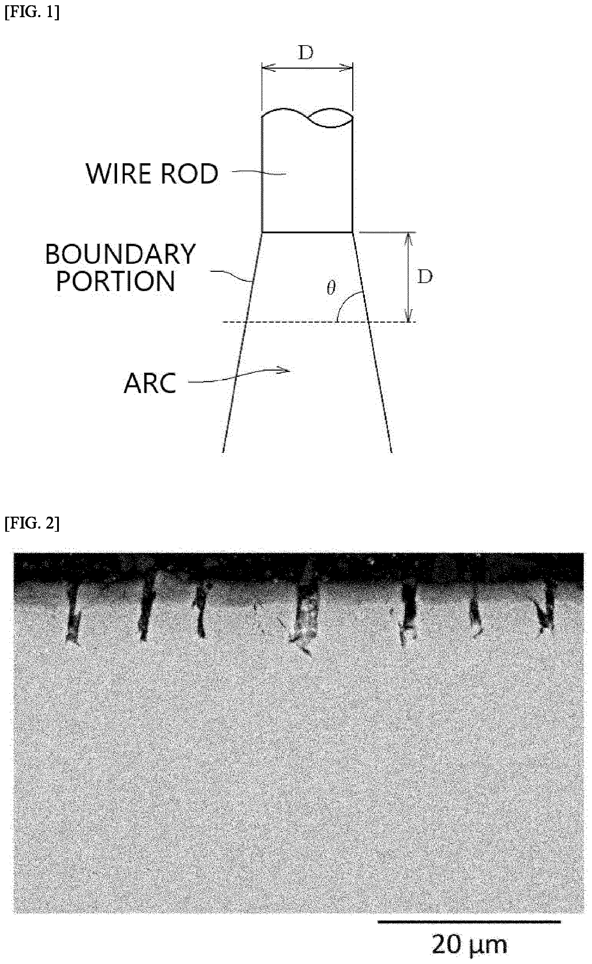

The "concentrated arc" is defined as the following arc. The concentrated arc will be described based on FIG. 1. The wire rod having a diameter D is arc-discharged, and a boundary portion of the arc is visually observed. In the case of an arc that is so blurred that the boundary portion cannot be determined, the arc is naturally called a diffused arc without being recognized as a concentrated arc.

Then, a truncated cone having a bottom surface at a position lower than a lower end surface of the wire rod by the diameter D of the wire rod is assumed, and when an angle formed by a side surface and the bottom surface of the truncated cone is set to θ, an arc in the case of θ ≥ 60° is defined as the concentrated arc. By setting θ ≥ 60°, droplets can be formed without fail.

The welding wire of the present invention has the above-described features, and can thus be used in a welding apparatus such as an apparatus for performing MIG welding.

A total content of the alkali metal and/or the alkaline earth metal described above is set to 0.002 mass% to 0.050 mass% with respect to the total mass of the welding wire. In the case where the content of these metals is less than 0.002 mass%, the effect of these metals is not sufficiently exhibited, so that a generation rate of the concentrated arc is reduced and it is difficult to generate one droplet by one pulse energization. As a result, a droplet at the leading end of the wire comes into contact (is short-circuited) with a molten pool of the base material, and a resulting increase in current releases the short circuit, resulting in a sputtering phenomenon. In addition, in the case where the total content of the alkali metal and/or the alkaline earth metal is more than 0.050 mass%, an arc force becomes too strong, and the sputtering phenomenon occurs around the droplet during a process of transfer to the welded portion of the welding. As a result, not only the bead but also portions other than the welded portion is roughened in appearance.

The content of the alkali metal and/or the alkaline earth metal is the content of the alkali metal in the case where the metal compound contains the alkali metal and does not contain the alkaline earth metal, is the content of the alkaline earth metal in the case where the metal compound does not contain the alkali metal and contains the alkaline earth metal, and is the content of the alkali metal and the alkaline earth metal in the case where the metal compound contains the alkali metal and the alkaline earth metal.

In addition, in terms of realization of one droplet by one pulse energization, the total content of the alkali metal and/or the alkaline earth metal is preferably 0.007 mass% to 0.015 mass% with respect to the total mass of the welding wire.

The welding wire of the present embodiment defines a form of the cracks formed on the surface of the welding wire and filled with the metal compound containing at least one metal selected from the group consisting of the alkali metal and the alkaline earth metal. Specifically, an area ratio of the cracks, an extension depth of the cracks, and a length between the cracks are defined. This is because the metal compound is made to be uniformly distributed on the surface of the welding wire.

The area ratio of the cracks is a ratio of areas of the cracks to an observation area of the surface of the welding wire. In this example, the metal compound is mainly held in a state of being filled in the cracks formed on the surface of the welding wire. In the case where the area ratio of the cracks is excessively small, the cracks for accommodating a predetermined amount of the metal compound is insufficient, and in the case where the area ratio of the cracks is excessively large, a large number of cracks which are not filled with the metal compound are present. In either case, the distribution of the metal compound is not uniform, resulting in an unstable arc. Therefore, in the present example, the area ratio of the cracks is defined to be 4% to 25%. The area ratio is more preferably 7% to 20%.

The extension depth of the cracks is a depth of the cracks from the surface of the welding wire toward the inner layer portion of the base material, and is defined to be 20 µm or less in the present example. The reason why the upper limit of the extension depth is defined is that in the case where an excessively deep crack is present, most of the metal compound is filled in the deep crack, the distribution of the metal compound is not uniform, and as a result, the arc becomes unstable. The extension depth of the cracks is more preferably 15 µm or less.

The length between the cracks is a length between cracks obtained by A/B, where B is the number of cracks present per predetermined length A µm in a longitudinal direction (wire drawing direction) of the welding wire, and is defined to be 15 µm or less in the present example. The reason why the upper limit of the length between the cracks is that in the case where the distance between cracks in the longitudinal direction becomes excessively long, the arc may become unstable. The length between the cracks is more preferably 12 µm or less.

In addition, the welding wire of the present invention contains Ti as the main component. In the present invention, "contains Ti as the main component" means that a component having the highest content in the wire is Ti, and 50 mass% or more is preferably Ti. In addition, in the case where a Ti alloy is employed, various additive elements can be contained as subcomponents for the purpose of improving strength, ductility, or the like of the welded portion or the sprayed layer to be obtained. Examples of adoptable additive elements and ranges of preferable addition amounts are shown below.

### (1) Al: 9 mass% or less

Al has functions of stabilizing an α phase, which is a low-temperature phase of Ti, and strengthening the α phase by being solid-dissolved in the α phase. However, in the case where the content of Al exceeds 9 mass%, a large amount of an intermediate phase (intermetallic compound) such as Ti₃Al is formed, which leads to inhibition of toughness or the ductility. On the other hand, in order to make the above effects remarkable, it is preferable to add Al in an amount of 1 mass% or more, and more preferably in a range of 2 mass% to 8 mass%.

### (2) At least one of N and O: 0.5 mass% or less in total

N and O also function as α-phase stabilizing and strengthening elements similar to Al, and an addition effect of O is particularly remarkable. However, in the case where the total content exceeds 0.5 mass%, the toughness or the ductility will be impaired. On the other hand, in order to make the above effects remarkable, it is preferable to add these elements in a total amount of 0.03 mass% or more, and more preferably in a range of 0.08 mass% to 0.2 mass% in total. The oxygen content herein refers to an oxygen content of the inner layer portion other than the oxygen-enriched layer.

### (3) One or more of V, Mo, Nb, and Ta: 45 mass% or less in total

All of these elements are stabilizing elements of a β phase, which is a Ti high-temperature phase, and are effective in improving hot workability and increasing the strength by improving heat treatability. However, all of these elements have a high specific gravity and a high melting point, and excessive addition thereof leads to impairment of effects of light weight and high specific strength peculiar to the Ti alloy, and an increase in the melting point of the alloy causes difficulty in manufacturing by melting, and thus the upper limit of the total addition amount is set to 45 mass%. On the other hand, in order to make the above effects remarkable, it is preferable to add these elements in a total amount of 1 mass% or more. Mo or Ta may be added in a small amount in order to improve corrosion resistance of the alloy.

### (4) One or more of Cr, Fe, Ni, Mn, and Cu: 15 mass% or less in total

These elements also have the effect of stabilizing the β phase, and are effective in improving the hot workability and increasing the strength by improving the heat treatability. However, all of these elements are likely to form an intermediate phase (for example, TiCr₂, TiFe, Ti₂Ni, TiMn, or Ti₂Cu) with Ti, and excessive addition thereof leads to impairment of the ductility and the toughness, and thus the upper limit of the total addition amount is set to 15 mass%. On the other hand, in order to make the above effects remarkable, it is preferable to add these elements in a total amount of 0.5 mass% or more. Ni may be added in a small amount in order to improve the corrosion resistance of the alloy.

### (5) At least one of Sn and Zr: 20 mass% or less in total

These elements are known as a neutral additive element that strengthens both the α phase and the β phase. However, excessive addition thereof leads to saturation of the effect, and thus the upper limit of the total addition amount is set to 20 mass%. On the other hand, in order to make the above effects remarkable, it is preferable to add these elements in a total amount of 0.5 mass% or more.

### (6) Si: 0.7 mass% or less

Si has effects of increasing creep resistance (creep rupture strength) of the alloy and improving heat resistance. However, excessive addition thereof rather causes a decrease in the creep rupture strength or the ductility due to formation of intermetallic compounds such as Ti₅Si₃, and thus the upper limit of the addition amount is set to 0.7 mass%. On the other hand, in order to make the above effects remarkable, it is preferable to add Si in an amount of 0.03 mass% or more, and more preferably in a range of 0.05 mass% to 0.5 mass%.

### (7) At least one of Pd and Ru: 0.5 mass% or less in total

These elements have the effect of improving the corrosion resistance of the alloy. However, since both of these elements are noble metals and are expensive, the upper limit of the addition amount is set to 0.5 mass% also in consideration of the saturation of the effect. On the other hand, in order to make the above effect remarkable, it is preferable to add these elements in an amount of 0.02 mass% or more.

Specific examples of an alloy composition include the following (the composition is described by bonding Ti, which is a main component element, at the head and subcomponent elements with their composition values, in which a unit of mass% is omitted, by a hyphen (for example, Ti-6 mass% Al-4 mass% V alloy is described as Ti-6Al-4V)).
[1] α type alloy
   Ti-5Al-2.5Sn, Ti-5.5Al-3.5Sn-3Zr-1Nb-0.3Mo-0.3Si, and Ti-2.5Cu
[2] Near α type alloy
   Ti-6Al-2Sn-4Zr-2Mo-0.1Si, Ti-8A1-1Mo-1V, Ti-2.25Al-2Sn-4Zr-2Mo, Ti-6Al-2Sn-2Zr-2Mo-0.25Si, Ti-6Al-2Nb-1Ta-0.8Mo, Ti-6Al-2Sn-1.5Zr-1Mo-0.35Bi-0.1Si, Ti-6Al-5Zr-0.5Mo-0.2Si, and Ti-5Al-6Sn-2Zr-1Mo-0.25Si
[3] α + β type alloy
   Ti-8Mn, Ti-3A1-2.5V, Ti-6Al-4V, Ti-6Al-6V-2Sn, Ti-7Al-4Mo, Ti-6Al-2Sn-4Zr-6Mo, Ti-6Al-2Sn-2Zr-2Mo-2Cr-0.25Si, Ti-10V-2Fe-3Al, Ti-4Al-2Sn-4Mo-0.2Si, Ti-4Al-4Sn-4Mo-0.2Si, Ti-2.25Al-11Sn-4Mo-0.2Si, Ti-5Al-2Zr-4Mo-4Cr, Ti-4.5Al-5Mo-1.5Cr, Ti-6Al-5Zr-4Mo-1Cu-0.2Si, and Ti-5Al-2Cr-1Fe
[4] β type alloy
   Ti-13V-11Cr-3Al, Ti-8Mo-8V-2Fe-3Al, Ti-3Al-8V-6Cr-4Mo-4Zr, Ti-11.5Mo-6Zr-4.5Sn, Ti-11V-11Zr-2Al-2Sn, Ti-15Mo-5Zr, Ti-15Mo-5Zr-3Al, Ti-15V-3Cr-3Al-3Sn, Ti-22V-4Al, and Ti-15V-6Cr-4Al
[5] Near β type alloy
   Ti-10V-2Fe-3Al
[6] Corrosion-resistant alloy (can also be used for welding, but is particularly useful in the case where it is desired to form a corrosion-resistant coating layer by spraying)
   Ti-0.15Pd, Ti-0.3Mo-0.8Ni, and Ti-5Ta

The welding wire of the present embodiment can be obtained by once rolling an ingot of Ti or the above-described Ti alloy into a coil, and then subjecting the rolled coil to an oxidation treatment to form an oxygen-enriched layer on the surface.

Specifically, in the welding wire of the present embodiment, the oxygen-enriched layer can be formed by thermally oxidizing a Ti-based metal wire rod in an oxygen-containing atmosphere. As the oxygen-containing atmosphere, an oxygen-containing nitrogen atmosphere (including an air atmosphere), an oxygen-containing inert gas atmosphere, or a gas atmosphere containing an oxygen compound such as water vapor may be used. In order to efficiently form the oxygen-enriched layer having a necessary and sufficient thickness, it is preferable to use an oxygen-containing atmosphere having an oxygen partial pressure of 5 × 10³ Pa to 15 × 10³ Pa. A treatment temperature is preferably set to, for example, 500°C to 800°C.

In this stage, in the coil wire rod in the thermally oxidized state, no crack is generated on the surface of the oxygen-enriched layer. Next, the coil wire rod is subjected to cold wire drawing treatment to form a wire rod having a predetermined wire diameter. At this time, the cracks are generated from the surface to the inside of the wire rod, which result in a large number of surface cracks in the surface layer portion of the wire rod.

The surface cracks are filled with the metal compound containing at least one metal selected from the group consisting of the alkali metal and the alkaline earth metal, thereby forming the welding wire of the present embodiment. In this way, the welding wire of the present embodiment having the oxygen-enriched layer and the metal compound is manufactured.

A method of filling the cracks with the metal compound will be described below. Examples of the filling method include a method in which these metal compounds are mixed in a lubricant, and the wire drawing is performed with using the lubricant during the cold wire drawing described above, to thereby generate the surface cracks and at the same time, fill the lubricant therein, whereby the surface cracks are filled with the metal compounds.

A filling amount of the metal compound can be adjusted, for example, by changing a mixing ratio of the metal compound to the lubricant, changing the thickness of the oxygen-enriched layer, or changing a surface reduction ratio at the time of the wire drawing.

In general, a mixture of calcium hydroxide, calcium stearate, and the like is used as the lubricant, but when a carbonate of, for example, a predetermined metal is mixed with such a lubricant, the metal is filled into the surface cracks in a state in which the metal is combined with calcium. Therefore, in the case in which the surface cracks are filled with a compound of a metal other than calcium, the wire rod may be once washed after the wire drawing to remove the lubricant from the surface cracks, and then the wire rod may be brought into a wire drawing machine in a state where the surface reduction ratio is 0% with using a predetermined metal compound.

In the case where a desired alkali metal or alkaline earth metal is contained in the lubricant per se, the wire drawing may be performed with using the lubricant.

### [Examples]

Next, Examples of the present invention will be described below. Here, 31 types of welding wires including Examples and Comparative Examples shown in Table 1 below were manufactured and subjected to various evaluations.

### [Table 1]

**Table 1**

| | | Composition of base material | Wire diameter (mm) | Types and content of alkali metal, etc. (mass%) | Crack extension depth (µm) | Crack area ratio (%) |
|---|---|---|---|---|---|---|
| Examples | 1 | Ti | 1.0 | Li: 0.012 | 7 | 9 |
| | 2 | Ti | 1.0 | Na: 0.009 | 9 | 11 |
| | 3 | Ti | 1.0 | Na: 0.024 | 12 | 15 |
| | 4 | Ti | 1.0 | Na: 0.021 | 17 | 21 |
| | 5 | Ti | 1.0 | Ca: 0.034 | 14 | 18 |
| | 6 | Ti | 1.0 | Ca: 0.042 | 18 | 17 |
| | 7 | Ti | 1.0 | Ca: 0.036 | 11 | 17 |
| | 8 | Ti | 1.0 | Ca: 0.019 | 10 | 14 |
| | 9 | Ti | 1.0 | Ca: 0.012 | 21 | 19 |
| | 10 | Ti | 1.0 | Ca: 0.015 | 7 | 19 |
| | 11 | Ti | 1.0 | Ca: 0.021 | 12 | 22 |
| | 12 | Ti | 1.0 | Ca: 0.032 | 16 | 23 |
| | 13 | Ti | 1.0 | Ca: 0.025 | 17 | 16 |
| | 14 | Ti | 1.0 | Ca: 0.009 | 9 | 21 |
| | 15 | Ti | 1.0 | Ca: 0.011 | 9 | 4 |
| | 16 | Ti | 1.0 | Cs: 0.004 | 6 | 17 |
| | 17 | Ti | 1.0 | Sr: 0.008 | 5 | 8 |
| | 18 | Ti | 1.0 | Ba: 0.003 | 7 | 9 |
| | 19 | Ti | 1.0 | K: 0.014 | 9 | 12 |
| | 20 | Ti | 1.0 | K: 0.005 | 11 | 10 |
| | 21 | Ti-6Al-4V | 1.0 | Ca: 0.023 | 10 | 15 |
| | 22 | Ti-6Al-4V | 1.0 | Ca: 0.014 | 16 | 23 |
| | 23 | Ti-6Al-4V | 1.0 | Ca: 0.022 | 17 | 14 |
| | 24 | Ti-6Al-4V | 1.0 | Ca: 0.015 | 9 | 10 |
| Comparative Examples | 1 | Ti | 1.0 | Ca: 0.006 | 19 | 26 |
| | 2 | Ti | 1.0 | - | 10 | 13 |
| | 3 | Ti | 1.0 | - | - | - |
| | 4 | Ti | 1.0 | Ca: 0.021 | 2 | 3 |
| | 5 | Ti | 1.0 | Ca: 0.022 | 15 | 28 |
| | 6 | Ti-6Al-4V | 1.0 | Ca: 0.023 | 21 | 26 |
| | 7 | Ti | 1.0 | Ca: 0.059 | 13 | 11 |

| | | Length between cracks (µm) | Presence or absence of oxygen-enriched layer | Arc stability | Long-time arc stability | |
|---|---|---|---|---|---|---|
| Examples | 1 | 10 | Presence | A | A | |
| | 2 | 9 | Presence | A | A | |
| | 3 | 7 | Presence | A | A | |
| | 4 | 13 | Presence | A | B | |
| | 5 | 6 | Presence | A | A | |
| | 6 | 7 | Presence | A | A | |
| | 7 | 16 | Presence | A | B | |
| | 8 | 6 | Presence | A | A | |
| | 9 | 10 | Presence | A | B | |
| | 10 | 15 | Presence | A | A | |
| | 11 | 9 | Presence | A | A | |
| | 12 | 9 | Presence | A | B | |
| | 13 | 13 | Presence | A | B | |
| | 14 | 14 | Presence | A | B | |
| | 15 | 13 | Presence | A | B | |
| | 16 | 5 | Presence | A | A | |
| | 17 | 11 | Presence | A | A | |
| | 18 | 10 | Presence | A | A | |
| | 19 | 5 | Presence | A | A | |
| | 20 | 7 | Presence | A | A | |
| | 21 | 18 | Presence | A | B | |
| | 22 | 13 | Presence | A | B | |
| | 23 | 14 | Presence | A | B | |
| | 24 | 9 | Presence | A | A | |
| Comparative Examples | 1 | 4 | Presence | A | C | |
| | 2 | 7 | Presence | C | C | |
| | 3 | - | Absence | C | C | |
| | 4 | 17 | Presence | A | C | |
| | 5 | 3 | Presence | A | C | |
| | 6 | 4 | Presence | A | C | |
| | 7 | 8 | Presence | C | C | |

### 1. Manufacturing of welding wire

The wire rod made of Ti or the Ti alloy was thermal-treated in the air to form an oxide-enriched layer (embrittlement phase) on the surface thereof. In each of Examples and Comparative Examples, temperature and/or time of the thermal treatment step was changed to vary the thickness and the oxygen concentration of the oxide-enriched layer formed on the surface, thereby varying the form of the cracks generated in the subsequent wire drawing treatment.

On the other hand, a carbonate powder of the alkali metal or the alkaline earth metal shown in Table 1 was prepared.

Koshin (a mixture of calcium hydroxide and calcium stearate, trade name of KYOEISHA CHEMICAL Co.,LTD) was prepared as a lubricant. A cold wire drawing treatment was performed by using the carbonate powder and the lubricant to obtain a welding wire having a wire diameter (Dw) of 1.0 mm.

In the case where a metal other than calcium alone coexists with the oxygen-enriched layer, the wire rod after the wire drawing was once washed with Light Clean (detergent) to wash off the Koshin, and then was passed through the wire drawing machine by using a carbonate powder of a predetermined metal with the surface reduction ratio of 0%, to fill into the surface cracks. In Comparative Examples 2 and 3, which did not contain the alkali metal and the alkaline earth metal, the wire rods after the wire drawing were left in a state of being washed by the same method.

### 2. Evaluation

For each of the obtained welding wires, the contents (mass%) of the alkali metal and the alkaline earth metal, presence or absence of the oxygen-enriched layer, the extension depth of the cracks, the area ratio of the cracks, the length between the cracks, the arc stability, and the long-time arc stability were evaluated according to the following specifications.

### <Content of Alkali Metal and Alkaline Earth Metal>

The content (mass%) was evaluated by inductively coupled plasma atomic emission spectrometry.

### <Presence or Absence of Oxygen-Enriched Layer>

(1) The cross section of the wire was mirror-polished, the polished surface thereof was subjected to surface analysis of the oxygen concentration distribution by EPMA, and when the oxygen concentration at a central portion of the cross section was 1, a region where the oxygen concentration was 1.2 or more (1.2 times or more the oxygen concentration at the central portion of the cross section) was defined as the oxygen-enriched layer. When the thickness of the oxygen-enriched layer was Tw and the wire diameter of the welding wire was Dw, whether the value of Tw/Dw was 0.3 × 10⁻³ to 1 × 10⁻¹ was determined. (2) Furthermore, the average value of the oxygen concentration in the oxygen-enriched layer (five measurement points) was obtained and taken as the average oxygen concentration of the oxygen-enriched layer. Whether the average oxygen concentration was 1 mass% or more is determined. The case where both requirements (1) and (2) were satisfied was defined as "presence of oxygen-enriched layer", and the case where at least one of the above requirements was not satisfied was defined as "absence of oxygen-enriched layer".

### <Extension Depth of Cracks>

The welding wire was cut in parallel with the longitudinal direction, the cut surface was mirror-finished, and then arbitrary 10 points of the cross section of the wire surface layer were observed with a scanning electron microscope (SEM). A length of the deepest crack among the observed cracks was defined as the extension depth of the cracks. The magnification during the observation was 2,000 times, and the observation area per field of view was 2,530 µm². As an example, FIG. 2 shows a scanning electron micrograph of a cross section of a surface layer portion of the welding wire according to Example 24.

### <Area Ratio of Cracks>

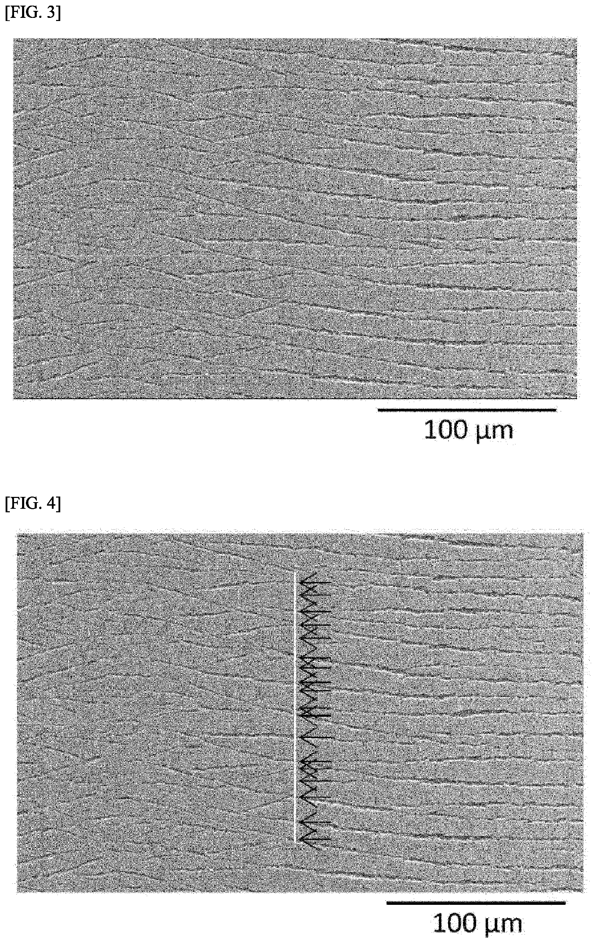

Arbitrary ten points on the wire surface of the welding wire were observed by SEM. A total area of the cracks was calculated by Win ROOF (manufactured by Mitani Shoji Co., Ltd.) for the cracks in the obtained ten observation images (secondary electron images obtained from the SEM observation). After that, the area ratio of the cracks was calculated by dividing the total area of the cracks by a total area of the field of view (ten points × area per field of view (64,550 µm²)). The magnification during the observation was 400 times. As an example, FIG. 3 shows a scanning electron micrograph of a surface of the welding wire according to Example 24.

### <Length between Cracks>

Arbitrary ten points on the wire surface of the welding wire were observed by SEM. A line corresponding to 150 µm in the wire drawing direction was additionally recorded at a center of the obtained ten observation images, and the total number of the cracks intersecting with the additionally recorded line was calculated (for example, 18 cracks intersect with a white line additionally recorded in the observation image shown in FIG. 4).

A value obtained by dividing a measured length (10 points × 150 µm) by the calculated total number of the cracks was defined as the length between the cracks in the longitudinal direction of the welding wire. The magnification during the observation was 400 times.

### <Arc Stability>

Each of the manufactured wires was subjected to bead-on-plate welding. Specifically, MIG welding was performed under the conditions shown in Table 2 below. The welding length was 100 mm. As a material to be welded in the bead-on-plate welding, a Grade 2 pure titanium plate defined by JIS: H4600 was used, and the size thereof was 1.5 mm in thickness, 50 mm in width, and 550 mm in length. The arc stability was evaluated based on the adhesion amount of spatters having a diameter of 1 mm or more per 100 mm of the welding length after completion of the welding. The case where the number of spatters having a diameter of 1 mm or more was zero to one was evaluated as "A", and the case where the number of the spatters having a diameter of 1 mm or more was two or more was evaluated as "C".

### <Long-Time Arc Stability>

Each of the manufactured wires was subjected to bead-on-plate welding. Specifically, MIG welding was performed three times under the conditions shown in Table 2 below. The welding length per welding was 500 mm. As a material to be welded in the bead-on-plate welding, a Grade 2 pure titanium plate defined by JIS: H4600 was used, and the size thereof was 1.5 mm in thickness, 50 mm in width, and 550 mm in length.
The long-time arc stability was evaluated based on the adhesion amount of spatters having a diameter of 1 mm or more generated by three times of the MIG welding. The case where the number of spatters having a diameter of 1 mm or more was zero to one was evaluated as "A", the case where the number of the spatters having a diameter of 1 mm or more was two to four was evaluated as "B", and the case where the number of the spatters having a diameter of 1 mm or more was five or more was evaluated as "C".

### [Table 2]

**Table 2**

| | |
|---|---|
| Welding current | 80 A |
| Arc voltage | 18V |
| Pulse peak current | 320 A |
| Pulse peak time | 1.2 ms |
| Base current | 30 A |
| Rise time | 0.4 ms |
| Fall time | 0.8 ms |
| Welding speed | 600 mm/min |
| Shielding gas amount | Pure Ar, 15 L/min |
| After-shielding gas amount | Pure Ar, 40 L/min |
| Back shielding gas amount | Pure Ar, 10 L/min |
| Conduit tube | Metal, length 1,500 mm |

| | |
|---|---|
| Welding power supply: Digital pulse CPDP-350 manufactured by DAIHEN Corporation | |

The above evaluation results are collectively shown in Table 1. From the evaluation results in Table 1, the following can be seen.

Comparative Example 1 is an example in which the area ratio of the cracks exceeds the upper limit of 25% of the present invention. In Comparative Example 1, the arc stability was evaluated as"A", but the "long-time arc stability" was evaluated as "C".

Comparative Example 2 does not contain the predetermined metal for improving the arc stability, and the arc stability and the long-time arc stability were both evaluated as "C".

Comparative Example 3 is an example that does not contain the predetermined metal for improving the arc stability and does not have a predetermined oxygen-enriched layer. As in Comparative Example 2, both the arc stability and the long-time arc stability were evaluated as "C" in Comparative Example 3 as well.

In Comparative Example 4, the area ratio of the cracks was out of the range defined by the present invention, and the arc stability was evaluated as "A", but the long-time arc stability was evaluated as "C".

Comparative Example 5 is an example in which the area ratio of the cracks exceeds the upper limit of 25% of the present invention. As in Comparative Example 1, in Comparative Example 5, the arc stability was evaluated as"A", but the "long-time arc stability" was evaluated as "C".

In Comparative Example 6, the area ratio of the cracks was out of the range defined by the present invention, and the arc stability was evaluated as "A", but the long-time arc stability was evaluated as "C".

Comparative Example 7 is an example in which the content of Ca exceeds the upper limit of 0.050 mass% of the present invention, and both the arc stability and the long-time arc stability were evaluated as "C".

As described above, in each Comparative Example, at least the evaluation of long-time arc stability was not passed ("C").

In contrast, in Examples 1 to 24 having the oxygen-enriched layer and in which the content of the alkali metal and the alkaline earth metal and the area ratio of the cracks are within the range defined in the present invention, the evaluations of the long-time arc stability were passed ("A" or "B").

More specifically, in Examples in which the area ratio of the cracks, the extension depth of the cracks, and the length between the cracks were within the preferable ranges, that is, in Examples (Examples 1 to 3, 5, 8, 16 to 20, and 24) in which the area ratio of the cracks was 7% to 20%, the extension depth of the cracks was 15 µm or less, and the length between the cracks was 12 µm or less, particularly good results were obtained as the evaluation of the long-time arc stability was "A".

The present invention has been described in detail above, but the present invention is not limited to the above embodiments and examples. In the above embodiments, embodiments where the wire rod for forming a molten metal is used as a wire for welding are described in details, but the wire rod for forming a molten metal of the present invention also has the stability of the arc and the stability of droplet transfer, and thus can be modified in various ways without departing from the gist of the present invention, such as being usable as a wire rod for spraying in an arc spraying method.

### INDUSTRIAL APPLICABILITY

The present invention can provide a wire rod for forming a molten metal, which is excellent in arc stability in long-time welding, and a welded product using the same.

The present application is based on a Japanese patent application (Japanese Patent Application No. 2021-018588) filed on February 8, 2021, and the contents thereof are incorporated herein as reference.

## Claims

1. A wire rod for forming a molten metal:
comprising Ti or a Ti alloy,
comprising an oxygen-enriched layer on a surface,
comprising a metal compound containing at least one metal selected from the group consisting of an alkali metal and an alkaline earth metal such that a total mass of the alkali metal and/or the alkaline earth metal is 0.002 mass% to 0.050 mass% with respect to a total mass of the wire rod,
having cracks filled with the metal compound, on the surface, and
having an area ratio of the cracks being 4% to 25%.

2. The wire rod for forming a molten metal according to Claim 1, having an extension depth of the cracks being 20 µm or less.

3. The wire rod for forming a molten metal according to Claim 1 or 2, having a length between the cracks obtained by A/B being 15 µm or less where B represents the number of the cracks present per predetermined length A µm in a longitudinal direction of the wire rod.

4. The wire rod for forming a molten metal according to any one of Claims 1 to 3, wherein the metal has a boiling point of 2,000°C or lower.

5. The wire rod for forming a molten metal according to any one of Claims 1 to 4, wherein the metal compound is a metal compound containing Ca.

6. The wire rod for forming a molten metal according to any one of Claims 1 to 5, wherein the oxygen-enriched layer has an average oxygen concentration of 1 mass% to 40 mass%.

7. A welded product, comprising a welded portion welded by using the wire rod for forming a molten metal described in any one of Claims 1 to 6, wherein the welded portions has a total length of 300 mm or more.
